# EUROPEAN PATENT SPECIFICATION

(11) **EP 2 396 562 B1**
(45) Date of publication and mention of the grant of the patent: **13.08.2014**
(21) Application number: 10740963.3
(22) Date of filing: 09.02.2010
(51) Int. Cl.: F16C 35/06, F16C 35/067, B29C 45/14, F16C 13/00, B22D 19/04, F16C 19/54

(54) **METHOD FOR INSTALLING A DOUBLE BEARING IN A CASTING, AND WHEEL COMPRISING A DOUBLE BEARING**
VERFAHREN ZUR INSTALLATION EINES DOPPELLAGERS IN EINER GUSSFORM UND RAD MIT DOPPELLAGER
PROCÉDÉ D'INSTALLATION D'UN DOUBLE PALIER DANS UNE COULÉE, ET ROUE COMPRENANT UN DOUBLE PALIER

(30) Priority: 10.02.2009 FI 20090042
(43) Date of publication of application: 21.12.2011
(73) Proprietor: Kone Corporation, 00330 Helsinki (FI)
(72) Inventor: LINDFORS, Erik, FIN-01650 Vantaa (FI)
(74) Representative: Graf Glück Kritzenberger
(86) International application number: PCT/FI2010/000010
(87) International publication number: WO 2010/092228

(56) References cited:
- EP-A1- 1 108 905
- EP-A1- 1 108 905
- GB-A- 1 545 310
- US-A1- 2005 281 501
- US-A1- 2005 281 501

## Description

The present invention relates to a method for installing a double bearing in a casting as defined in the preamble of claim 1 and a wheel comprising a double bearing as defined in the preamble of claim 4.

The use of one ball bearing in essentially narrow wheels, such as in the diverting pulleys used in elevators, the bearing wheels used in escalators or in other corresponding wheels or supporting bearings, might cause problem. A problem can arise from the fact that the load carrying capacity of a ball bearing is limited, so that a bearing .. that is unnecessarily large must be selected according to the load carrying capacity to be a ball bearing, in which case also the shaft to be disposed in the bearing is unnecessarily robust. Another problem is that the raceway of an individual ball bearing is not quite straight, but instead some side pull is produced in the ball bearing and via it, among other things, some extra wear.

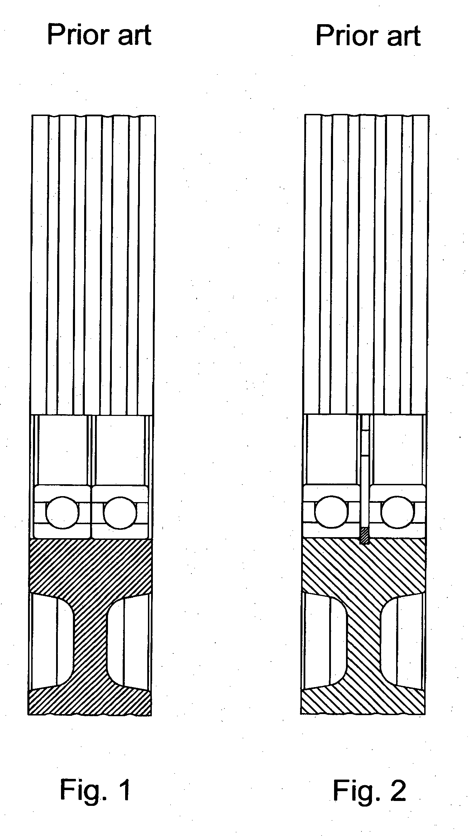

It has been endeavored to solve the load carrying capacity problem and raceway problem by disposing two ball bearings side-by-side as a so-called double bearing. The solution of Fig. 1 presents this type of prior-art solution, which presents a cast diverting pulley provided with rope grooves with the bottom part cross-sectioned. Two similar ball bearings placed side-by-side to each other are disposed in the hub of the wheel, the inner surfaces of which ball bearings are touching each other. The bearings are either installed in the hub of the wheel after casting or the wheel is cast directly around the bearings.

If installation of the bearings is performed after casting, one problem is generally an expensive price, because in this case a lot of work phases are needed. In addition, according to the instruction of the bearing manufacturer, special bearings that are fitted to each other should be used as a double bearing, which are expensive. If it is not desired to use expensive bearings for cost reasons, the bearings can be selected to be larger than normal, which however again raises the price and changes e.g. the shaft structures.

If, on the other hand, the wheel is cast around the bearings, a problem when using normal bearings is the tolerance in the axial direction, i.e. in the width direction of the bearings, which can be so large that the inner rims of the bearings can be wider than the outer rims. In this case, e.g. when making a wheel by die-casting, the die-casting mold presses the outer rims of the bearings together, even if the inner rims were wider than the outer rims. The result in this case might be bearing damage.

Efforts have been made to solve this problem also by placing suitable spacer plates into the bearing housing for forming a gap in the inner rim of the bearings before casting. The positioning of these types of unattached spacer plates in the mold before casting is, however, extremely awkward in die casting technology.

Fig. 2 presents a second solution according to prior art. In it a wheel is first cast, after which a bearing housing is machined, and finally a groove that functions as a hole lock is machined in the center of the rim of the bearing housing. After this the spacer ring is placed into position and the ball bearings on both sides of it, in which case a gap that is the thickness of the spacer ring remains between the inner surfaces of the bearings. This is a technically viable method, but the numerous machining phases make the solution in practice too expensive to manufacture.

The GB 1 545 310 A discloses a method for installing a double bearing in a casting according to the preamble of claim 1.

The object of this invention is to eliminate the aforementioned drawbacks and to achieve a simple, operationally reliable and inexpensive method for installing a double bearing in a casting. Additionally the purpose of the invention is to achieve a very functional and inexpensive wheel that comprises a double bearing. The method according to the invention is characterized by what is disclosed in claim 1. Correspondingly, the wheel according to the invention is characterized by what is disclosed in claim 4. Preferred embodiments of the invention are characterized by what is disclosed in the dependent claims.

Some inventive embodiments are also discussed in the descriptive section of the present application.

In practice a good solution to do for a double-bearing wheel is to dispose a ring-like separator means between the bearing units of the double bearing, which separator means for the first part is supporting the bearing unit by its outer rim and for the second part the bearing units from each other, and a thick gap of the thickness of the separating part of the bearings remains between the bearing units. The gap is always arranged to be so large so that although the outer rims of the bearing units of the double bearing are in connection with each other, possibly via a very thin separator means, the inner rims of the bearing units stay separate from each other. In practice the tolerances of the dimensions of the inner and outer rims of the bearing units in the direction of the shaft of the bearing set the minimum thickness of the separator part. The separator means is of such a material that melts partly or wholly in connection with the casting into the material of the wheel or other piece to be cast.

The solution according to the invention is suited to all types of rotating elements provided with bearings and more particularly e.g. to diverting pulleys used in elevators, bearing wheels used in escalators or other corresponding wheels and support bearings, Likewise instead of the die-casting described in the embodiment, other casting methods are suited for use in the solution according to the invention, e.g. pour casting.

The invention can be advantageously applied such that the separator means that comes between the bearing units of the double bearing is of essentially the same material as the casting cast around the double bearing.

The separator means of a double bearing made for a wheel or other piece can be of metal, plastic or some other suitable material. Preferably the separator means is of essentially the same material as the casting to be cast, e.g. a wheel. When using thermoplastic materials or correspondingly used materials, when making a cast by means of a melting separator means it is preferable to fit the amount and temperature of the material to be cast in relation to the natural cooling and/or aided cooling of the piece being manufactured such that the separator means melts sufficiently to form with the cooled casting material a uniform entity, preferably without interfaces between them, but wherein the separator means is on the other hand unmelted and thus retains during the casting its load bearing capacity for positioning the bearings to each other. Correspondingly, when using a casting material that is hardened chemically or otherwise separately, e.g. with UV light, it might be necessary to chemically or otherwise soften the surface of the separator means that will be on the side of the cast. Thus, in this way the separator means melts or softens first, possibly mixes with or at least forms an essentially borderless joint with, the casting and then hardens again as the casting hardens.

One advantage of the solution according to the invention is that the bearing rims are not damaged in the casting phase, e.g. in the die-casting, because the inner rims of the bearings do not manage to touch each other, even with cheap bearings. Additionally, in this way cheaper and smaller bearings can safely be used as double bearings, in which case the manufacturing costs decrease. Likewise the reliability improves because double bearings can be put into use at smaller costs and thus larger single bearings, in which also there is the aforementioned side-pull problem, will not need to be used. Another advantage is that e.g. in robotic production there will be fewer bearings dropped because the bearings can be attached to each other before the casting.

The invention can also be applied to the making of a joint with bearing. In this case the bearings are cast from their outer rim into the second of the pieces to be jointed, in a corresponding manner to what is presented in this application for making a double bearing in a cast wheel. The tenets relating to the making of a wheel and wheel bearing presented in this application are directly transferable to the bearing of a joint and to making a joint bearing.

In the following, the invention will be described in greater detail by the aid of some embodiments and by referring to the attached simplified drawings, wherein
- Fig. 1: presents one prior-art cast diverting pulley that is provided with rope grooves, as viewed from the side and with the bottom part cross-sectioned,
- Fig. 2: presents a second prior-art cast diverting pulley that is provided with rope grooves, as viewed from the side and with the bottom part cross-sectioned,
- Fig. 3: presents one cast diverting pulley according to the invention, which is provided with rope grooves, as viewed from the side and with the bottom part cross-sectioned,
- Fig. 4: presents one detail in the bearing system of the solution according to Fig. 3, as viewed from the side and cross-sectioned,
- Fig. 5: presents one alternative detail in the bearing system of the solution according to the invention, as viewed from the side and cross-sectioned,
- Fig. 6: presents a second alternative detail in the bearing system of the solution according to the invention, as viewed from the side and cross-sectioned,
- Fig. 7: presents a side view of a spacer ring type according to Figs. 3-5, cross-sectioned and magnified, and
- Fig. 8: presents a side view of a spacer ring type according to Figs. 6, cross-sectioned and magnified.

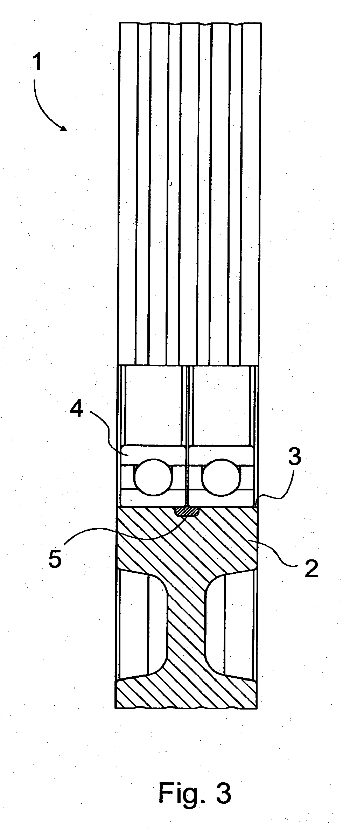

Figs. 3-5 and 7 present a front view of one type of solution according to the invention in connection with a double bearing. Fig. 3 contains a cast diverting pulley 1 provided with rope grooves on its outer rim, the bottom part of which diverting pulley is cross-sectioned for illustrative reasons so that half the double bearing 4 is visible. The diverting pulley 1 comprises a hub 2, which comprises a center hole 3 for the aforementioned double bearing 4. The double bearing 4 comprises two bearing units that are essentially similar, e.g. ball bearings, which are placed side-by-side to each other. A ring-like separator means 5 is disposed between the ball bearings, which separator means comprises a support part 6, which is fitted to support both the ball bearings by their outer rim, and a separator part 7, which is fitted to extend inwards between the bearings towards the axis of rotation of the bearings such that a gap of the thickness of the separator part 7 remains between the ball bearings.

The inner surface of the support part 6 of the separator means 5, which is essentially symmetrical in its cross-sectional shape, i.e. the surface on the bearing side, comprises support surfaces 8 essentially in the direction of the axis of rotation of the bearings, one on both sides of the separator part 7. Correspondingly, the separator part 7 comprises a side support surface 9 on both sides, which side support surface is essentially at a right angle with respect to the axis of rotation of the bearings, i.e. in the direction of the side surfaces of the rims of the bearings, and is fitted to rest on the side surfaces that face each other of the outer rims of the bearings.

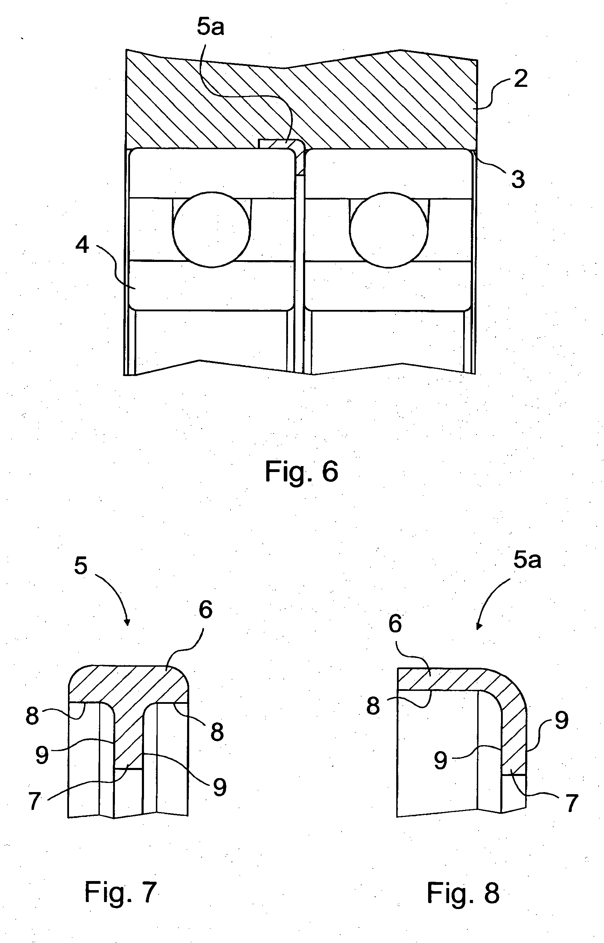

Figures 6 and 8 present a cross-sectioned front view of a second solution according to the invention in connection with a double bearing. In this solution a ring-like separator means 5a is fitted between the ball bearings, which separator means is shaped like a capital L in its cross-section and comprises a support part 6 and a separator part 7, and which separator means is fitted to extend inwards between the bearings towards the axis of rotation of the bearings such that a gap of the thickness of the separator part 7 remains between the ball bearings. A difference here with respect to the solution described earlier is that the support part 6 is fitted to support only one of the ball bearings of the double bearing by its outer rim.

The inner surface of the support part 6 of the separator means 5a, i.e. the surface on the bearing side, comprises a support surface 8, essentially in the direction of the axis of rotation of the bearings, on one side of the separator part 7. Correspondingly, the separator part 7 comprises a side support surface 9 on both sides, which side support surface is essentially at a right angle with respect to the axis of rotation of the bearings, i.e. is essentially in the direction of the side surfaces of the rims of the bearings, and is fitted to rest on the side surfaces that face each other of the outer rims of the bearings.

The length of the separator part 7 in the radial direction, i.e. the reach in the direction of the side surfaces of the bearings, i.e. the difference in the radius of the support surface 8 and the radius of the centre hole of the separator means 5, 5a can vary, but what is essential is that the reach does not extend to the inner rim of the bearings. Preferably the reach is shorter than the thickness of the outer rim of the bearing in the radial direction.

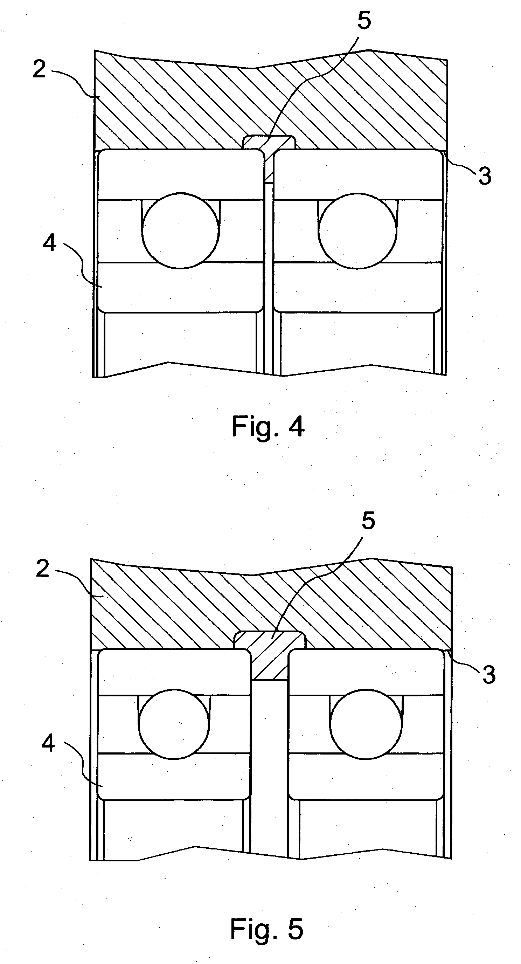

Also the thickness of the separator part 7 can vary, as is presented by way of example in Figs. 4, 5 and 6. In this case the bearing pair 4 can be used also in wider wheels or corresponding elements. In order for the separation between the bearing pair 4 to work reliably, the minimum thickness of the separator part 7 must, however, be of a determined magnitude. A minimum thickness that is sufficiently safe is larger than two times the width tolerance of the bearing, i.e. L>2*t, where L = the thickness of the separator part and t = the width tolerance of the bearing.

The material of the separator means 5, 5a can be metal, plastic or some other suitable material. It can also be of such a material that the separator means 5, 5a melts in connection with the casting into the material of the wheel 1 to be cast. In this case it can be e.g. of essentially the same material as the casting to be cast, e.g. a wheel 1.

The separator means 5 settles into its position best when its cross-section is such that only the side support surfaces 9 and the support surface/support surfaces 8 rest on the outer rim of the bearing. In this case, the inner corner between the side support surface 9 and the support surface 8 does not rest on the outer corner of the bearing but instead a gap remains between. In this case e.g. the inner corner between the side support surface 9 and the support surface 8 of the separator means 5 can be a right angle or e.g. extended inwards from the shear plane between the side support surface 9 and the support surface 8 such that the thickness of the separator part 7 of the separator means 5 and the thickness of the support part 6 is thinner at the point of the inner corner than at the point of the support surfaces 8 and the side support surfaces 9.

With the method according to the invention, the double bearing is installed in a casting e.g. as follows: first a double bearing 4 is formed of two essentially similar ball bearings, i.e. bearing units, by disposing the ball bearings next to each other side-by-side and by placing a separator means 5, 5a between the ball bearings such that the separator means 5, 5a rests on at least one of or on both the outer surfaces of the outer rim of the bearing and the separator part 7 of the separator means 5, 5a is disposed between the side surfaces that face each other of the outer rims. Thus by means of the separator means 5, 5a, a gap is formed between the ball bearings in their axial direction, which gap prevents the inner rims of the ball bearings from touching each other.

The double bearing 4 formed in the manner described above is after this placed in the casting mold in the correct position and the casting, such as a wheel, is cast around the double bearing 4, in which case the double bearing 4 remains in its position in the hub of the wheel 1 after the casting is completed. The separator part 7 of the separator means 5, 5a keeps the ball bearings separate from each other during the casting and at the same time prevents casting material from entering the inner parts of the bearings from between the outer rims of the bearings.

It is obvious to the person skilled in the art that different embodiments of the invention are not limited to the example described above, but that they may be varied within the scope of the claims presented below. Thus for instance the sequence and number of phases of the method can differ to what is presented above.

It is also obvious to the skilled person that other bearings can be used, such as e.g. roller bearings, instead of ball bearings.

It is further obvious to the person skilled in the art that the cross-sectional shape of the separator means can be different to what is described above.

## Claims

1. Method for installing a double bearing (4) in a casting, which double bearing (4) comprises at least two bearing units that are essentially similar to each other, preferably two ball bearing units, which method comprises at least the following phases:
- a double bearing (4) is formed by disposing two bearings next to each other side-by-side and by placing a separator means (5, 5a) that forms a gap between the bearings such that the separator means (5, 5a) rests on the outer surface of the outer rim of at least one bearing and in that the separator part (7) of the separator means (5, 5a) is disposed between the side surfaces that face each other of the outer rims of the bearings,
- the formed double bearing (4) is placed in the casting mold in the correct position,
- a casting is cast around the double bearing (4), **characterized in that** the separator means (5) is arranged to melt or to soften at least partly and the separator means is allowed to harden again as the casting hardens.

2. Method according to claim 1, **characterized in that** before casting the separator means (5) is supported on the outer surface of the outer rim of both bearings and **in that** the separator part (7) of the separator means (5) is disposed between the side surfaces that face each other of the outer rims of the bearings.

3. Method according to claim 1 or 2, **characterized in that** the casting is cast around the double bearing (4) as a die- cast.

4. Wheel comprising at least a hub (2), which comprises a center hole (3), into which a double bearing (4) according to one of the preceding claims is disposed, wherein the bearing units of the double bearing (4) are separated from each other in the axial direction by means of the separator means (5, 5a) resting against an outer surface of an outer rim of at least one bearing, **characterized in that** the separator means is of a material which melts partly or wholly in connection with the casting into the material of the wheel.

5. Wheel according to claim 4, **characterized in that** a ring-like separator means (5) is disposed between the bearing units of the double bearing (4), which separator means comprises a support part (6), which is fitted to support both the bearing units by their outer rim, and a separator part (7), which is fitted to extend inwards between the bearing units towards the axis of rotation of the bearings such that a gap of the thickness of the separator part (7) remains between the bearing units.

6. Wheel according to claim 4 or 5, **characterized in that** the separator means (5) is essentially symmetrical in its cross-section and the surface of the support part (6) of the separator means (5) on the bearing side comprises support surfaces (8) essentially in the direction of the axis of rotation of the bearings, one on both sides of the separator part (7).

7. Wheel according to claim 4, **characterized in that** a ring- like separator means (5a) is disposed between the bearing units of the double bearing (4), which separator means comprises a support part (6), which is fitted to support one of the bearing units by its outer rim, and a separator part (7), which is fitted to extend inwards between the bearing units towards the axis of rotation of the bearings such that a gap of the thickness of the separator part (7) remains between the bearing units.

8. Wheel according to any of claims 4-7 above, **characterized in that** the separator part (7) comprises a side support surface (9) on both sides, which side support surface is essentially in the direction of the side surfaces of the rims of the bearings and is fitted to rest on the side surfaces that face each other of the outer rims of the bearings.

9. Wheel according to any of claims 4-8 above, **characterized in that** the radial reach of the separator part (7) in the direction of the side surfaces of the bearings is shorter than the thickness of the outer rim of the bearing in the radial direction.

10. Wheel according to any of claims 4-9 above, **characterized in that** the thickness of the separator part (7) is larger than twice the width tolerance of the bearing.

11. Wheel according to any of claims 4-10 above, **characterized in that** the separator means (5) is of essentially the same material as the casting cast around the double bearing (4).

12. Wheel according to any of claims 4-10 above, **characterized in that** the separator means (5) is fitted to prevent casting material from entering the gap between the bearing units of the double bearing (4) via the outer rims of the bearings.

13. Wheel according to any of claims 4-12 above, **characterized in that** the separator means (5) comprises material hardened together with the casting material of the wheel.

## Patentansprüche

1. Verfahren zum Installieren eines Doppellagers (4) in einem Gehäuse, welches Doppellager (4) wenigstens zwei Lagereinheiten aufweist, die im Wesentlichen einander gleichen, vorzugsweise zwei Kugellagereinheiten, welches Verfahren zumindest die folgenden Schritte umfasst:
- ein Doppellager (4) wird gebildet, indem zwei Lager nebeneinander angeordnet werden und indem eine Trenneinrichtung (5, 5a) angeordnet wird, die einen Spalt zwischen den Lagern bildet, so dass die Trenneinrichtung (5, 5a) an der Außenfläche der Außenkante wenigstens eines Lagers anliegt und der Trennteil (7) der Trenneinrichtung (5, 5a) zwischen den sich einander zuweisenden Seitenflächen der Außenkanten der Lager angeordnet ist,
- das so gebildete Doppellager (4) wird in korrekter Position in einer Gussform angeordnet,
- ein Gehäuse wird um das Doppellager (4) gegossen, **dadurch gekennzeichnet, dass** die Trenneinrichtung (5) ausgebildet ist um zu schmelzen oder wenigstens teilweise aufzuweichen, und dass die Trenneinrichtung wieder aushärten kann, wenn das Gehäuse aushärtet.

2. Verfahren nach Anspruch 1, **dadurch gekennzeichnet, dass** vor dem Gießen die Trenneinrichtung (5) an der Außenfläche der Außenkante beider Lager getragen ist und dass der Trennteil (7) der Trenneinrichtung (5) zwischen den einander zuweisenden Seitenflächen der Außenkanten der Lager angeordnet wird.

3. Verfahren nach Anspruch 1 oder 2, **dadurch gekennzeichnet, dass** das Gehäuse um das Doppellager (4) als Spritzgussteil gespritzt wird.

4. Rad umfassend wenigstens eine Nabe (2), die ein zentrales Loch (3) hat, in welchem ein Doppellager (4) nach einem der vorhergehenden Ansprüche angeordnet ist, wobei die Lagereinheiten des Doppellagers (4) in axialer Richtung voneinander mittels der Trenneinrichtung (5, 5a) getrennt sind, die gegen eine Außenfläche einer Außenkante wenigstens eines Lagers anliegt, **dadurch gekennzeichnet, dass** die Trenneinrichtung aus einem Material besteht, welches teilweise oder völlig in Verbindung mit dem Gießen in das Material des Rades aufschmilzt.

5. Rad nach Anspruch 4, **dadurch gekennzeichnet, dass** eine ringförmige Trenneinrichtung (5) zwischen den Lagereinheiten des Doppellagers (4) angeordnet ist, welche Trenneinrichtung einen Tragteil (6) hat, der konzipiert ist, beide Lagereinheiten an ihrer Außenkante oder an ihrem Außenumfang zu unterstützen, und einen Trennteil (7), der konzipiert ist, sich zwischen den Lagereinheiten nach Innen in Richtung auf die Rotationsachse der Lager zu erstrecken, so dass ein Spalt der Stärke des Trennteils (7) zwischen den Lagereinheiten verbleibt.

6. Rad nach Anspruch 4 oder 5, **dadurch gekennzeichnet, dass** die Trenneinrichtung (5) in ihrem Querschnitt im Wesentlichen symmetrisch ist, und dass die Fläche des Tragteils (6) der Trenneinrichtung (5) an der Lagerseite Tragflächen (8) im Wesentlichen in Richtung der Rotationsachse der Lager aufweist, und zwar jeweils eine auf beiden Seiten des Trennteils (7).

7. Rad nach Anspruch 4, **dadurch gekennzeichnet, dass** eine ringförmige Trenneinrichtung (5a) zwischen den Lagereinheiten des Doppellagers (4) angeordnet ist, welche Trenneinrichtung einen Tragteil (6) hat, der konzipiert ist, eine der Lagereinheiten an ihren Außenumfang zu tragen, und einen Trennteil (7), der konzipiert ist, sich zwischen den Lagereinheiten in Richtung auf die Rotationsachse der Lager nach Innen zu erstrecken, so dass ein Spalt der Dicke des Trennteils (7) zwischen den Lagereinheiten verbleibt.

8. Rad nach einem der Ansprüche 4 bis 7, **dadurch gekennzeichnet, dass** das Trennteil (7) eine Seitentragfläche (9) auf beiden Seiten hat, welche Seitentragfläche im Wesentlichen in Richtung der Seitenfläche des Außenumfangs der Lager verläuft und dazu konzipiert ist, an den einander zuweisenden Seitenflächen der Außenkanten der Lager anzuliegen.

9. Rad nach einem der Ansprüche 4 bis 8, **dadurch gekennzeichnet, dass** die radiale Erstreckung des Trennteils (7) in Richtung der Seitenflächen der Lager kürzer ist als die Stärke der Außenkante des Lagers in radialer Richtung.

10. Rad nach einem der Ansprüche 4 bis 9, **dadurch gekennzeichnet, dass** die Dicke des Trennteils (7) größer als das Doppelte der Breitentoleranz des Lagers ist.

11. Rad nach einem der Ansprüche 4 bis 10, **dadurch gekennzeichnet, dass** die Trenneinrichtung (5) im Wesentlichen aus dem gleichen Material besteht, wie das Gehäuse, welches um das Doppellager (4) gegossen oder gespritzt wird.

12. Rad nach der Ansprüche 4 bis 10, **dadurch gekennzeichnet, dass** die Trenneinrichtung (5) dazu konzipiert ist, das Gehäusematerial davon abzuhalten, in den Spalt zwischen den Lagereinheiten des Doppellagers (4) über die Außenkanten der Lager einzudringen.

13. Rad nach einem der Ansprüche 4 bis 12, **dadurch gekennzeichnet, dass** die Trenneinrichtung (5) ein Material enthält, das aushärtet zusammen mit dem Gehäusematerial des Rades.

## Revendications

1. Procédé d'installation d'un double palier (4) dans une coulée, lequel double palier (4) comprend au moins deux unités de palier essentiellement similaires, préférentiellement deux unités de palier à billes, lequel procédé comprend au moins les phases suivantes :
- un double palier (4) est formé en disposant deux paliers de manière adjacente côte à côte et en plaçant un moyen de séparation (5, 5a) qui forme un espace entre les paliers de telle sorte que le moyen de séparation (5, 5a) repose sur la surface externe du bord externe d'au moins un palier, et que la partie de séparation (7) du moyen de séparation (5, 5a) est disposée entre les surfaces latérales se faisant face des bords externes des paliers,
- le double palier (4) ainsi formé est placé dans le moule de coulée dans la position appropriée,
- une coulée est coulée autour du double palier (4),
**caractérisé par le fait que** le moyen de séparation (5) est agencé pour fondre ou pour se ramollir au moins partiellement et le moyen de séparation est autorisé à se resolidifier lorsque la coulée se solidifie.

2. Procédé selon la revendication 1, **caractérisé par le fait que**, avant la coulée, le moyen de séparation (5) est supporté sur la surface externe du bord externe des deux paliers et **par le fait que** la partie de séparation (7) du moyen de séparation (5) est disposée entre les surfaces latérales se faisant face des bords externes des paliers.

3. Procédé selon la revendication 1 ou 2, **caractérisé par le fait que** la coulée est coulée autour du double palier (4) sous forme de coulée sous pression.

4. Roue comprenant au moins un moyeu (2), qui comprend un trou central (3), dans lequel est disposé un double palier (4) selon l'une des revendications précédentes, dans laquelle les unités de palier du double palier (4) sont séparées l'une de l'autre dans la direction axiale au moyen du moyen de séparation (5, 5a) reposant contre la surface externe d'un bord externe d'au moins un palier, **caractérisée par le fait que** le moyen de séparation est constitué d'un matériau qui fond partiellement ou entièrement en liaison avec la coulée dans le matériau de la roue.

5. Roue selon la revendication 4, **caractérisée par le fait qu'**un moyen de séparation de type annulaire (5) est disposé entre les unités de palier du double palier (4), lequel moyen de séparation comprend une partie de support (6), qui est adaptée pour supporter les deux unités de palier par leur bord externe et une partie de séparation (7), qui est adaptée pour s'étendre vers l'intérieur entre les unités de palier vers l'axe de rotation des paliers de telle sorte qu'un espace de l'épaisseur de la partie de séparation (7) reste entre les unités de palier.

6. Roue selon la revendication 4 ou 5, **caractérisée par le fait que** le moyen de séparation (5) est essentiellement symétrique dans sa section transversale et la surface de la partie de support (6) du moyen de séparation (5) côté palier comprend des surfaces de support (8) essentiellement dans la direction de l'axe de rotation des paliers, une sur les deux faces de la partie de séparation (7).

7. Roue selon la revendication 4, **caractérisée par le fait qu'**un moyen de séparation de type annulaire (5a) est disposé entre les unités de palier du double palier (4), lequel moyen de séparation comprend une partie de support (6), qui est adaptée pour supporter l'une des unités de palier par son bord externe, et une partie de séparation (7), qui est adaptée pour s'étendre vers l'intérieur entre les unités de palier vers l'axe de rotation des paliers de telle sorte qu'un espace de l'épaisseur de la partie de séparation (7) reste entre les unités de palier.

8. Roue selon l'une quelconque des revendications 4 à 7 ci-dessus, **caractérisée par le fait que** la partie de séparation (7) comprend une surface de support latérale (9) sur les deux faces, laquelle surface de support latérale est essentiellement dans la direction des surfaces latérales des bords des paliers et est adaptée pour se reposer sur les surfaces latérales se faisant face des bords externes des paliers.

9. Roue selon l'une quelconque des revendications 4 à 8 ci-dessus, **caractérisée par le fait que** la portée radiale de la partie de séparation (7) dans la direction des surfaces latérales des paliers est plus courte que l'épaisseur du bord externe du palier dans la direction radiale.

10. Roue selon l'une quelconque des revendications 4 à 9 ci-dessus, **caractérisée par le fait que** l'épaisseur de l'élément de séparation (7) est plus importante que le double de la tolérance de largeur du palier.

11. Roue selon l'une quelconque des revendications 4 à 10 ci-dessus, **caractérisée par le fait que** le moyen de séparation (5) est constitué essentiellement du même matériau que la coulée coulée autour du double palier (4).

12. Roue selon l'une quelconque des revendications 4 à 10 ci-dessus, **caractérisée par le fait que** le moyen de séparation (5) est adapté pour éviter que le matériau de coulée entre dans l'espace entre les unités de palier du double palier (4) par les bords extérieurs des paliers.

13. Roue selon l'une quelconque des revendications 4 à 12 ci-dessus, **caractérisée par le fait que** le moyen de séparation (5) comprend un matériau solidifié conjointement avec le matériau de coulée de la roue.
